# EUROPEAN PATENT APPLICATION

(11) **EP 2 490 096 A2**
(43) Date of publication of application: **22.08.2012**
(21) Application number: 12000912.1
(22) Date of filing: 13.02.2012
(51) Int. Cl.: G06F 1/16

(54) **Portable terminal having a touch screen**

(30) Priority: 16.02.2011 CN 201110039597; 08.02.2012 US 201213368579
(71) Applicant: Sony Ericsson Mobile Communications AB, 221 88 Lund (SE)
(72) Inventor: Xu, Gang, Chaoyang District Beijing 100102 (CN); Sun, Peng, Chaoyang District Beijing 100102 (CN)
(74) Representative: Banzer, Hans-Jörg

(57) **Abstract**

The present invention provides a portable terminal (100), comprising: a first body (110) provided with a first transparent display panel (113); a second body (120) provided with a second transparent display panel (123); and a connecting part (130) for movably connecting the first body (110) with the second body (120); wherein both surfaces of the first transparent display panel (113) are provided with a touch screen (112, 114) respectively; and at least one surface of the second transparent display panel (123) is provided with a touch screen (122, 124). The present invention provides a display area as large as possible.

## Description

### Technical Field

The present invention relates to a portable terminal, and particularly, to a portable terminal having a touch screen.

### Description of the Related Art

Currently, many portable terminals are provided with touch screens and/or keypads. Although the touch screen and the keypad are both used for information input, they play different roles. The keypad is used to quickly input symbols such as characters, while the touch screen is adapted to move and select objects, like the mouse of a computer. Although the touch screen has a handwriting input function to input characters, etc., as compared with the keypad input, it brings a very different operation experience to the user in addition to the difference of input speed. Thus, in order to better meet the user's demand, the portable terminal would be better if simultaneously provided with the touch screen and the keypad. However, the inventor finds the following problems in the portable terminal simultaneously provided with the touch screen and the keypad:

Since the keypad has a number of keys, it occupies a large space on the mobile terminal, and limits the size of the display screen. In order to reduce the space occupied by the keypad, the number or size of the keys on the keypad are decreased, which causes operation inconvenience and even misoperation.

In addition, the layout of a keypad on the terminal is designed for a specific country (e.g., America, Sweden, etc.) and/or language (e.g., English, Japanese, etc.). Once the layout is determined, it is difficult to change the layout according to different countries and/or languages, which also causes inconveniences to the user's operation.

Furthermore, the display screens of most portable terminals are opaque display screens. When a camera is mounted on such portable terminal, the finder frame displayed on the opaque display screen is usually only suitable for self photographing framing (e.g., the framing, by the display screen of a notebook computer, of the picture to be taken by the camera) or the non-self photographing framing (e.g., the framing, by the display screen of a mobile phone, of the picture to be taken by the camera; when photographing self, it is often difficult to frame through the finder frame since the display screen can not be seen), while it is not suitable for self photographing and non-self photographing simultaneously. In order to display images at the front and rear sides of the display, the front and rear surfaces of the cover of some portable terminals are both mounted with a display, which increases the number of the displays, and hence raises the cost.

Moreover, the current portable terminals need to be further improved either in the thickness or the acquirable size of the display area.

### Summary of the Invention

The present invention is proposed with respect to the above problems in the prior art. The present invention is directed to provide a portable terminal that overcomes at least one defect existing due to the limitation of the prior art, and provides at least one beneficial selection.

The present invention provides a portable device as defined in claim 1. The dependent claims define preferred embodiments of the invention.

According to an aspect of the present invention, a portable terminal is provided, comprising: a first body provided with a first transparent display panel; a second body provided with a second transparent display panel; and a connecting part for movably connecting the first body with the second body; wherein both surfaces of the first transparent display panel are provided with a touch screen respectively; and at least one surface of the second transparent display panel is provided with a touch screen.

Preferably, the touch screen provided on a first surface of the first transparent display panel is a resistive touch screen, and the touch screen provided on a second surface of the first transparent display panel is a capacitive touch screen, wherein the first surface is a surface facing the second transparent display panel when the first body overlaps with the second body.

Preferably, both surfaces of the second transparent display panel are provided with a touch screen respectively.

Preferably, when the first body overlaps with the second body, the touch screens provided on the face-to-face surfaces of the first transparent display panel and the second transparent display panel are resistive touch screens, while the touch screens provided on the back-to-back surfaces of the first transparent display panel and the second transparent display panel are capacitive touch screens.

Preferably, the connecting part is an articulated part that makes the first body rotate in relation to the second body around a predetermined axis.

Preferably, the at least one surface of the second transparent display panel comprises a surface of the second transparent display panel facing the first transparent display panel when the second body overlaps the first body.

Preferably, the predetermined axis is an axis generated by an intersection of planes where the first transparent display panel and the second transparent display panel are located; and a maximum angle for the first body to be rotatable in relation to the second body is 360°.

Preferably, the predetermined axis is an axis perpendicular to the plane where the second transparent display panel is located.

Preferably, the connecting part is a sliding mechanism that makes the second body slide in relation to the first body.

Preferably, the at least one surface of the second transparent display panel comprises a surface of the second transparent display panel with the back towards the second transparent display panel.

The portable terminal according to the above aspects of the present invention can use the keypad for input while overcoming the problem of space occupation by the hardware keypad, so as to provide a display area as large as possible.

In addition, as compared with the opaque multi-display panel, the mobile terminal of the present invention adopts the transparent display panel such that the displayed image is visible at both surfaces of the display panel, which reduces the number of the display panels, decreases the cost, and thins the cell phone.

In addition, since the displayed image is visible at both surfaces of the display panel, a framing may be carried out through the finder frame at both sides of the display panel, which is suitable for self photographing and non-self photographing, so as to achieve a better photographing effect.

These and further aspects and features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

Furthermore, it shall be appreciated that, although the terms "first", "second", etc. may be used for various elements in the text, the elements are not limited by such terms. These terms are just used to distinguish one element from another. For example, the first element may be called as the second element, and similarly, the second element may be called as the first element, without deviating from the scope of the disclosure.

Many aspects of the invention can be better understood with reference to the following drawings. The components in the drawings are not necessarily to scale, emphasis instead being placed upon clearly illustrating the principles of the present invention. To facilitate illustrating and describing some parts of the invention, corresponding portions of the drawings may be exaggerated in size, e.g., made larger in relation to other parts than in an exemplary device actually made according to the invention. Elements and features depicted in one drawing or embodiment of the invention may be combined with elements and features depicted in one or more additional drawings or embodiments. Moreover, in the drawings, like reference numerals designate corresponding parts throughout the several views and may be used -to designate like or similar parts in more than one embodiment.

It shall be appreciated that the above general descriptions and the following detailed descriptions of the present invention are just exemplary and explanatory, and they just intend to provide further understandings of the invention for which protection is sought.

### Brief Description of the Drawings

The accompanying drawings constitute a part of the specification, illustrate the embodiments of the present invention and together with the description serve to explain the present invention. The drawings described as follows illustrate several exemplary embodiments of the present invention, and a person skilled in the art can obtain other drawings based on these drawings without paying any creative effort. In the drawings:
Fig. 1A is an exemplary front view of a portable terminal according to a first embodiment of the present invention;
Fig. 1B is a cross section diagram of the portable terminal in Fig. 1A;
Fig. 2 illustrates an exemplary interface displayed when the portable terminal is in a folded state;
Fig. 3 is a schematic diagram of an input with the displayed keypad when the portable terminal is in the folded state;
Fig. 4 is a schematic diagram of an input with the displayed keypad when the portable terminal is in an unfolded state;
Fig. 5 is a schematic diagram of a handwriting input when the portable terminal is in the unfolded state;
Fig. 6 is a schematic diagram of the portable terminal in Fig. 1B, but in which the bodies have been relatively rotated 360°;
Fig. 7 is a schematic diagram of a slidable portable terminal according to another embodiment of the present invention;
Fig. 8 is an exemplary cross section diagram of the portable terminal in Fig. 7;
Fig. 9 is another exemplary cross section diagram of the portable terminal in Fig. 7;
Fig. 10 is a schematic diagram of a rotatable portable terminal according to another embodiment of the present invention;
Fig. 11 is an exemplary cross section diagram of the portable terminal in Fig. 10; and
Fig. 12 is another exemplary cross section diagram of the portable terminal in Fig. 10

### Detailed Description of the Preferred Embodiments

The preferred embodiments of the present invention will be described in detail as follows. The drawings illustrate the examples of the preferred embodiments of the present invention. Throughout the drawings, the same or similar parts are represented with the same reference sign so far as possible.

To be noted, in order to avoid the present invention being vague due to unnecessary details, the drawings only illustrate device structures and/or processing steps closely associated with the solution of the present invention, and other details well-known by a person skilled in the art and not so necessary to understand the present invention are omitted.

The portable terminal may be implemented as different types of terminals. The examples of these terminals (also referred to as "mobile terminals") include, but are not limited to, mobile phone, smart phone, notebook computer, digital broadcasting terminal, personal digital assistant (PDA), portable multimedia player (PMP), navigator, etc.

In the present application, the embodiments of the present invention are described mainly based on the mobile terminal in the form of mobile phone (e.g., cell phone). But it shall be appreciated that, the present invention is not limited to the mobile phone and it is suitable for any appropriate type of mobile terminal.

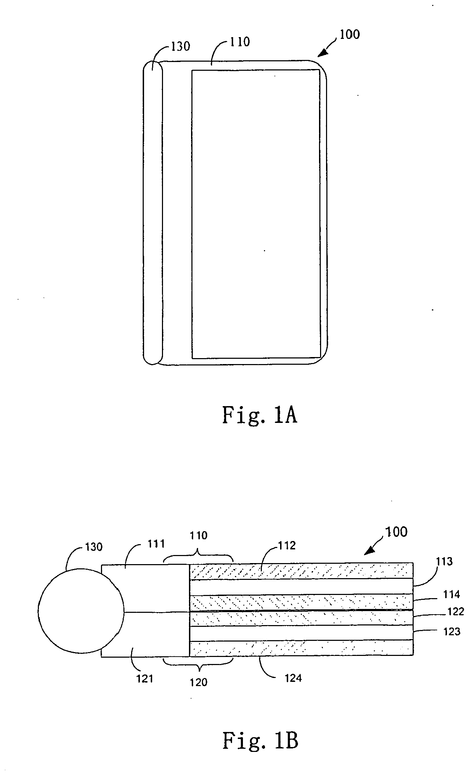

Figs. 1A and 1B are schematic diagrams of a foldable mobile terminal 100 according to a first embodiment of the present invention. As illustrated in Figs. 1A and 1B, the mobile terminal 100 includes: a first body 110, a second body 120, and a connecting part 130 that connects the first body 110 with the second body 120. The first body 110 for example may be provided with a main printed circuit board 111 and a first transparent display panel 113. The two surfaces of the first transparent display panel 113 are provided with touch screens, i.e., a first touch screen 112 and a second touch screen 114, respectively. The second body 120 for example may be provided with a battery 121 and a second transparent display panel 123. The two surfaces of the second transparent display panel 123 are provided with touch screens, i.e., a third touch screen 122 and a fourth touch screen 124, respectively. Although Fig. 1 illustrates that both surfaces of the first transparent display panel 113 and both surfaces of the second transparent display panel 123 are provided with the touch screen, respectively, the present invention is not limited thereto. Only one surface of the first transparent display panel 113 or one surface of the second transparent display panel 123 may be provided with the touch screen, which will be described later.

In an alternative embodiment of the present invention, the main printed circuit board may be provided on the second body 120, and the battery may be provided on the first body 110, or the main printed circuit board and the battery are provided on the same body (the first body 110 or the second body 120).

The connecting part 130 connects the first body 110 with the second body 120 movably. For example, the connecting part 130 may be an articulated part (e.g., hinge) that makes the first body 110 rotate relative to the second body 120 around a predetermined axis. As an example, for the foldable mobile terminal 100, the predetermined axis may be an axis (hereinafter referred to as horizontal axis) generated by the intersection of the planes where the first transparent display panel 113 and the second transparent display panel 123 are located. In that case, the first body 110 may be in a folded or unfolded state in relation to the second body 120.

In another embodiment of the present invention, the predetermined axis of the connecting part (e.g., the articulated part) 130 may be an axis (hereinafter referred to as vertical axis) perpendicular to a surface of the second transparent display panel. A mobile terminal with such a connecting part may be called as rotatable mobile terminal.

In another embodiment of the present invention, the connecting part (e.g., the articulated part) 130 may be further designed to make the first body 110 rotate in relation to the second body 120 around the horizontal axis as well as the vertical axis. A mobile terminal with such a mechanism may be called as gyral terminal.

Alternatively, the connecting part 130 may be a sliding mechanism that makes the first body 110 slide in relation to the second body 120 in a length or width direction. A mobile terminal with such a sliding mechanism may be called as slidable terminal.

Since the connecting parts of various types (e.g., foldable, rotatable, gyral, slidable, etc.) of mobile terminals are known structures, herein they are not described in details.

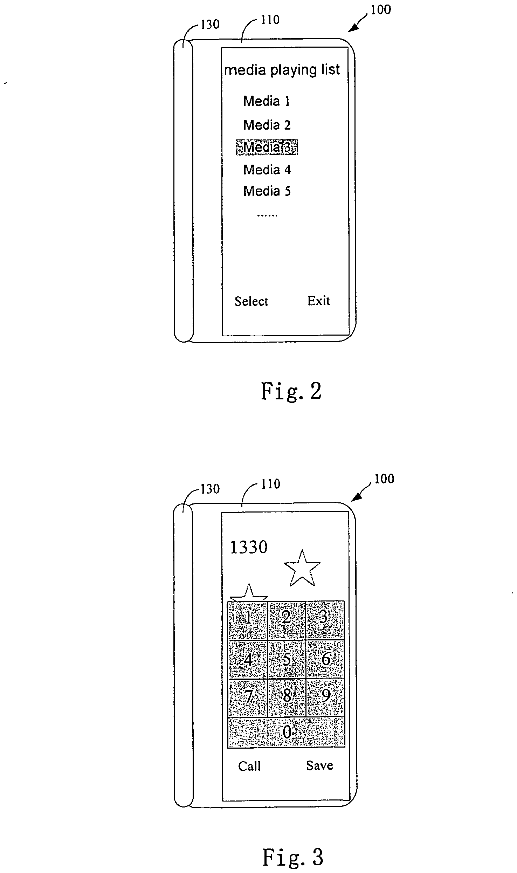

In the first embodiment of the present invention, under the condition that the mobile terminal is the foldable mobile terminal 100, the first touch screen 112 and the fourth touch screen 124 may be enabled, while the second touch screen 114 and the third touch screen 122 may be disabled, when the terminal is in the folded state. In that case, the user interface (UI) may be displayed through any one (e.g., the first transparent display panel 113) of the first transparent display panel 113 and the second transparent display panel 123, while the other one (e.g., the second transparent display panel 123) is kept in a not working state, and the display panel in the non-operative state is transparent. Thus the UI may be displayed on the transparent display panel 113 or 123, and functions displayed on the UI, such as webpage browsing, short message browsing or edition, media playing, etc, may be used through touch operations on the first touch screen 112 and the fourth touch screen 124, as illustrated in Fig. 2.

For example, when the user holds the mobile terminal 100 as illustrated in Fig. 2 with a hand, he may perform a selective input of information through the thumb located in front of the terminal 100, and may move the page of media playing list as illustrated in Fig. 2 up and down through up-and-down touches on the fourth touch screen 124 by the forefinger located behind the terminal 100.

In another embodiment of the present invention, when the terminal 100 is in the folded state, the terminal interface may be operated by just using one of the first touch screen 112 and the fourth touch screen 124. During the actual operation, the first touch screen 112 and/or the fourth touch screen 124 may be enabled or disabled upon request. For example, the functions displayed on the transparent display panel may be operated by just touching the first touch screen 112.

In addition, when the foldable mobile terminal 100 is in the folded state, a keypad (e.g., numeric keypad, alphabetic keypad, alphanumeric keypad or standard keypad) can be displayed on the transparent display panel and can be used through the first touch screen 112 to input information. The displayed position or layout of the keypad on the transparent display panel may be moved or arranged freely through the first touch screen 112. For example, when a telephone number needs to be inputted, a numeric keypad may be displayed on the transparent display panel, as illustrated in Fig. 3. When numeric keys are selected by touching the first touch screen 112 with fingers to input numbers, the inputted numbers may be displayed on the transparent display panel. When a new task is to be inputted or a notepad is to be edited, an alphabetic keypad or a standard keypad may be displayed on the transparent display panel, such that the user may input information by using the alphabetic keypad or the standard keypad through the first touch screen 112. The keypad pattern displayed on the transparent display panel may be opaque or semitransparent. Under the condition that the keypad pattern is semitransparent, even if some characters inputted are covered by the keypad with the increment of the input characters, the covered characters are still visible to the user, and the input will not be influenced. In addition, an opaque or semitransparent background image may be displayed under the keypad pattern simultaneously when the keypad pattern is displayed. As illustrated in Fig. 3, the background image is a pattern of pentagrams.

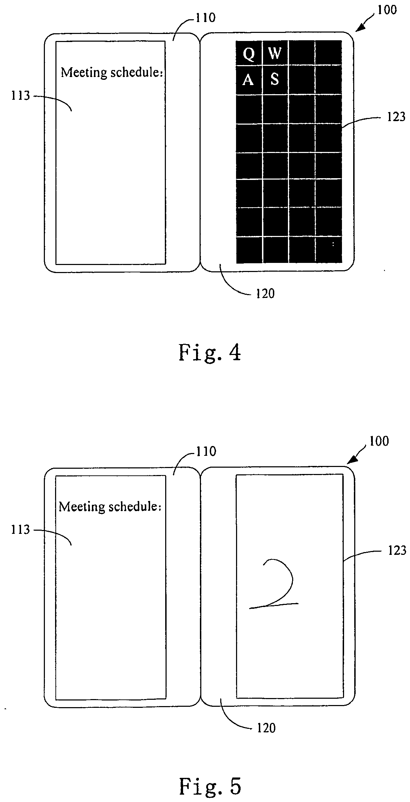

When the foldable mobile terminal 100 is in the unfolded state (i.e., the first body is unfolded in relation to the second body), the second touch screen 114 and the third touch screen 122 may be enabled, while the first touch screen 112 and the fourth touch screen 124 may be disabled. In that case, the first transparent display panel 113 and the second transparent display panel 123 may work simultaneously. One of the transparent display panels (e.g., the first transparent display panel 113) may display the UI, while the other (e.g., the second transparent display panel 123) may serve as the input keypad or the handwriting input panel, as illustrated in Figs. 4 and 5.

For example, when the second transparent display panel 123 serves as the input keypad, the keypad pattern is displayed thereon, and the user may input information by touching the keypad pattern. In case the second transparent display panel 123 serves as the handwriting input panel, a handwriting input may be carried out thereon.

In an embodiment of the present invention, preferably, the representative examples of the first and second transparent display panels may be, but are not limited to, transparent Light Emitting Diode (LED) display, transparent Organic Light Emitting Diode (OLED) display, transparent Polymer Light Emitting Diode (PLED) display, etc.

In some embodiments of the present invention, any of the touch screens 112 to 124 may be a capacitive touch screen or a resistive touch screen. The resistive touch screen is easily to be operated and any contact thereof can be used, but it requires a press operation for the input and only supports the single-touch at present. The capacitive touch screen needs no press operation for the input, and only requires a slight touch and supports the multi-touch. But the capacitive touch screen has more restriction to the contacts, for example, an insulation object, such as nail, stylus, etc., can not be used for touch input, while the input by the contact with the human body (e.g., the finger) is more suitable.

In an embodiment of the present invention, the first touch screen 112 and the fourth touch screen 124 are preferably capacitive touch screens, while the second touch screen 114 and the third touch screen 122 are preferably resistive touch screens, but the present invention is not limited thereto. In other words, when the mobile terminal 100 is in the folded state, i.e., the first body 110 overlaps with the second body 120, the touch screens provided on the face-to-face surfaces of the first transparent display panel 113 and the second transparent display panel 123 are resistive touch screens, while the touch screens provided on the back-to-back surfaces of the first transparent display panel 113 and the second transparent display panel 123 are capacitive touch screens. But the present invention is not limited thereto, e.g., the first touch screen 112 and/or the fourth touch screen 124 may be resistive touch screen(s). In addition, one of the second touch screen 114 and the third touch screen 122 may be configured as the resistive touch screen for the convenience of handwriting input, and the other may be configured as the capacitive touch screen.

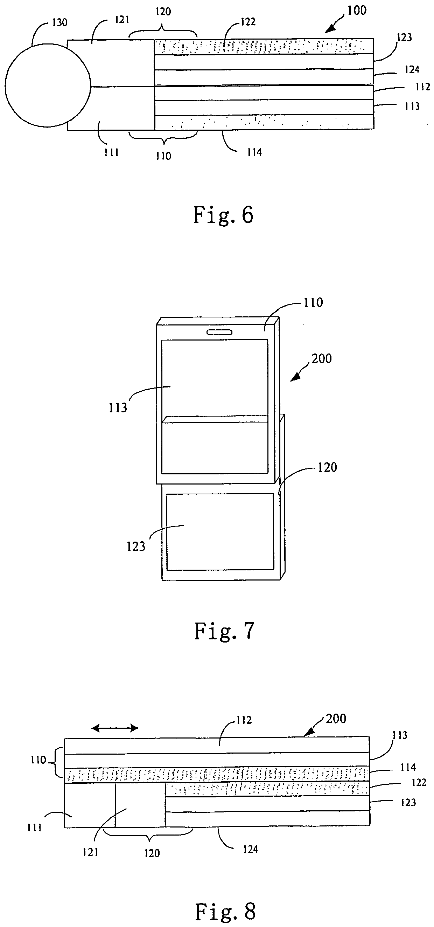

In another embodiment of the present invention, the connecting part 130 may be configured such that the first body 110 may be unfolded (turned) for 360° in relation to the second body 120. As a result, after the first body is turned for 360° in relation to the second body, the touch screens (the second and third touch screens) originally located inside the terminal become outside, while the touch screens (the first and fourth touch screens) originally located outside the terminal become inside, as illustrated in Fig. 6. -Thus, the user's operations are enriched and more conveniences are provided.

As described above, the foldable mobile terminal 100 of the present invention has the first transparent display panel 113 provided on the first body 110, and the second transparent display panel 123 provided on the second body 120. The two surfaces of the first transparent display panel 113 are provided with the first touch screen 112 and the second touch screen 114, respectively; while at least one surface of the second transparent display panel 123 is provided with the third touch screen 122. The above mobile terminal, in case of being folded, can also display operable information on the first transparent display panel 113 or the second transparent display panel 123, and perform operations through the first touch screen 112. In case of being unfolded and information needs to be inputted, the mobile terminal can display the keypad on the first transparent display panel 113 or the second transparent display panel 123, and input by using the displayed keypad through corresponding second touch screen 114 or third touch screen 122. Other information than the keypad may be displayed when information input is not required, which avoids the problem that the hardware keypad occupies the space. Further, when self-photographs are taken with the camera, the displayed image is visible at both surfaces of the display panel since a transparent display panel is used in the mobile terminal of the present invention. Thus a framing may be carried out with the finder frame at both sides of the display panel, which is suitable for non-self photographing and self photographing, and hence a better photographing effect can be achieved.

Therefore, the above mobile terminal can use the keypad for input while overcoming the problem of space occupation by the hardware keypad, so as to provide a display area as large as possible. In addition, as compared with an opaque multi-display panel, the mobile terminal of the present invention adopts the transparent display panel such that the displayed image is visible at both surfaces of the display panel, which reduces the number of the display panels, decreases the cost, and thins the cell phone. In addition, the mobile terminal of the present invention is suitable for self photographing and non-self photographing.

The above advantages are just exemplary, and there may be one or more other advantages due to the specific applications during practice.

As illustrated in Fig. 1B, the touch screens on both surfaces of the first transparent display panel 113 and those on both surfaces of the second transparent display panel 123 completely cover the first transparent display panel 113 and the second transparent display panel 123. In another embodiment of the present invention, the touch screen on either surface of the first transparent display panel 113 or either surface of the second transparent display panel 123 may be just provided on a portion of corresponding transparent display panel, like the touch control panel of the notebook computer, so as to control operations of information displayed on the entire display panel.

The structure of the foldable mobile terminal 100 is described as above, and the slidable and rotatable mobile terminals are taken as examples and described as follows.

Figs. 7 and 8 are schematic diagrams of the slidable mobile terminal 200 according to another embodiment of the present invention. As illustrated in Figs. 7 and 8, the slidable mobile terminal 200 includes: a first body 110, a second body 120 and a connecting part (not illustrated) that connects the first body 110 with the second body 120. The first body 110 is provided with a first transparent display panel 113. The two surfaces of the first transparent display panel 113 are provided with a first touch screen 112 and a second touch screen 114, respectively. The second body 120 may be provided with a printed circuit board 111, a battery 121 and a second transparent display panel 123. The two surfaces of the second transparent display panel 123 are provided with a third touch screen 122 and a fourth touch screen 124, respectively. For the slidable mobile terminal 200, the connecting part is a sliding mechanism that connects the first body with the second body and makes the second body slide in relation to the first body. The direction indicated by the arrow in Fig. 8 is the sliding direction of the first body in relation to the second body.

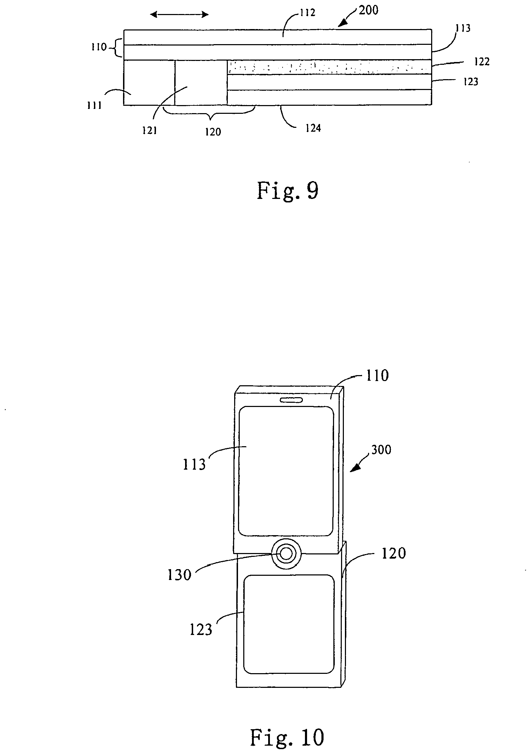

In another embodiment of the present invention, as illustrated in Fig. 9, only one surface of the first transparent display panel 113 is provided with the touch screen. For example, preferably only the outside (i.e., a surface of the first transparent display panel with the back towards the second transparent display panel) of the first transparent display panel 113 is provided with the first touch screen 112, while the inside may have no touch screen. The direction indicated by the arrow in Fig. 9 is the sliding direction of the first body in relation to the second body.

The slidable mobile terminal 200 of the above structure can use the keypad for input while overcoming the problem of space occupation by the hardware keypad, so as to provide a display area as large as possible. In addition, as compared with an opaque multi-display panel, the mobile terminal of the present invention uses the transparent display panel such that the displayed image is visible at both surfaces of the display panel, which reduces the number of the display panels, decreases the cost, and thins the cell phone. In addition, the mobile terminal of the present invention is suitable for self photographing and non-self photographing simultaneously, so as to achieve a better photographing effect.

The above advantages are just exemplary, and there may be one or more other advantages due to the specific applications during practice.

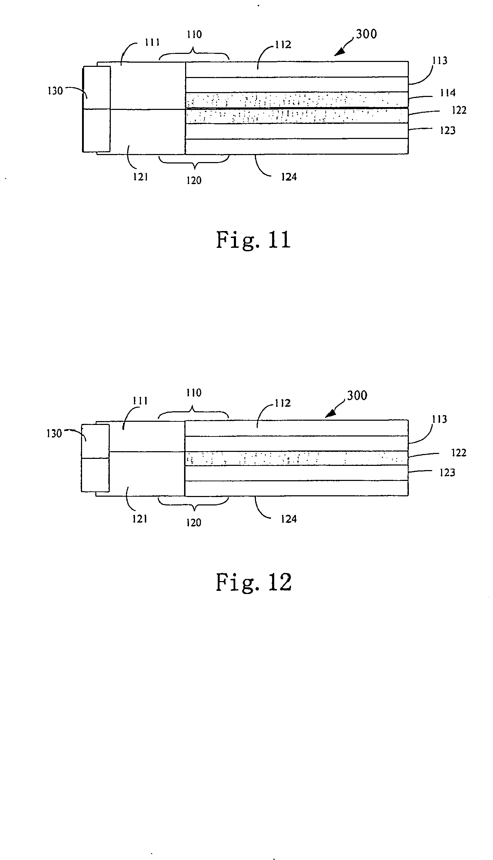

The rotatable mobile terminal 300 may have a structure similar to that as illustrated in Fig. 1B, and the only difference is that the connecting part 130 is an articulated part that makes the first body rotate around an axis perpendicular to the second transparent display panel, as illustrated in Figs. 10 and 11. Since other parts are the same as those illustrated in Fig. 1B, the structure is not described in details herein.

In another embodiment of the present invention, as illustrated in Fig. 12, only one surface of the first transparent display panel 113 of the rotatable mobile terminal 300 is provided with the touch screen. For example, preferably, only the surface of the first transparent display panel 113 facing outwards is provided with the first touch screen 112, while the side facing inwards may have no touch screen.

The gyral mobile terminal (not illustrated) may have a structure similar to that as illustrated in Fig. 1B, and the only difference is that the connecting part is an articulated part that makes the first body rotate in relation to the second body around the axis parallel with the second transparent display panel and the axis perpendicular to the second transparent display panel. Other parts are the same as those illustrated in Fig. 1B.

In another embodiment of the present invention, only one surface of the second transparent display panel of the gyral mobile terminal (not illustrated) is provided with the touch screen. For example, preferably only the surface of the second transparent display panel facing inwards is provided with a third touch screen.

Features described and/or illustrated with respect to one embodiment can be used in one or more other embodiments in a same or similar way, and/or combine with or replace features in other embodiments.

It shall be appreciated that, the term "transparent" in the present invention covers the conditions of semitransparent and partially transparent.

The above embodiments make further and detailed descriptions of the object, technical solution and beneficial effect of the present invention. It shall be appreciated that, the above descriptions are just embodiments of the present invention, and do not limit the protection scope of the present invention. Any amendment, equivalent substitution, improvement, etc. made within the spirit and principle of the present invention shall be covered by the protection scope of the present invention.

## Claims

1. A portable terminal (100; 200; 300), comprising:
a first body (110) provided with a first transparent display panel (113);
a second body (120) provided with a second transparent display panel (123); and
a connecting part (130) for movably connecting the first body (110) with the second body (120);
wherein both surfaces of the first transparent display panel (113) are provided with a touch screen (112, 114) respectively; and
at least one surface of the second transparent display panel (123) is provided with a touch screen (122, 124).

2. The portable terminal (100; 200; 300) according to claim 1,
wherein the touch screen (112) provided on a first surface of the first transparent display panel (113) is a resistive touch screen, and the touch screen (114) provided on a second surface of the first transparent display panel (113) is a capacitive touch screen, wherein the first surface is a surface facing the second transparent display panel (123) when the first body (110) overlaps with the second body (120).

3. The portable terminal (100; 200; 300) according to claim 1 or claim 2,
wherein both surfaces of the second transparent display panel (123) are provided with a touch screen (122, 124) respectively.

4. The portable terminal (100; 200; 300) according any one of claims 1-3,
wherein when the first body (110) overlaps with the second body (120), the touch screens (112, 114, 122, 124) provided on the face-to-face surfaces of the first transparent display panel (113) and the second transparent display panel (123) are resistive touch screens, while the touch screens (112, 114, 122, 124) provided on the back-to-back surfaces of the first transparent display panel (113) and the second transparent display panel (123) are capacitive touch screens.

5. The portable terminal (100; 200; 300) according to any one of claims 1-4, wherein the connecting part (130) is an articulated part that provides for the first body (110) to rotate in relation to the second body (120) around a predetermined axis.

6. The portable terminal (100; 200; 300) according to claim 5, wherein:
the at least one surface of the second transparent display panel (123) comprises a surface of the second transparent display panel (123) facing the first transparent display panel (113) when the second body (120) overlaps the first body (110).

7. The portable terminal (100; 200; 300) according to claim 5 or claim 6, wherein:
the predetermined axis is an axis generated by an intersection of planes where the first transparent display panel (113) and the second transparent display panel (123) are located; and
a maximum angle for the first body (110) to be rotatable in relation to the second body (120) is 360°.

8. The portable terminal (100; 200; 300) according any one of claims 5-7,
wherein the predetermined axis is an axis perpendicular to the plane where the second transparent display panel (123) is located.

9. The portable terminal (100; 200; 300) according to any one of claims 1-8, wherein the connecting part (130) is a sliding mechanism that makes the second body (120) slide in relation to the first body (110).

10. The portable terminal (100; 200; 300) according to claim 9,
wherein the at least one surface of the second transparent display panel (123) comprises a surface of the second transparent display panel (123) with the back towards the second transparent display panel (123).
